# EUROPÄISCHE PATENTANMELDUNG

(11) **EP 4 089 618 A1**
(43) Veröffentlichungstag der Anmeldung: **16.11.2022**
(21) Anmeldenummer: 21176234.9
(22) Anmeldetag: 27.05.2021
(51) Int. Cl.: G06Q 50/04, G06Q 10/06, G05B 19/418

(54) **COMPUTERIMPLEMENTIERTES VERFAHREN ZUR VERMITTLUNG EINER AUSFÜHRUNG EINER ARBEITSAUFGABE, KOOPERATIONSMODUL UND ANLAGE**

(30) Priorität: 14.05.2021 DE 102021204918
(71) Anmelder: Siemens Aktiengesellschaft, 80333 München (DE)
(72) Erfinder: Büsgen, Ralph, 91091 Großenseebach (DE); Feld, Joachim, 90451 Nürnberg (DE); Hohl, Hubertus, 82008 Unterhaching (DE); Nickles, Jochen, 90763 Fürth (DE); Sauer, Markus, 81739 München (DE)

(57) **Zusammenfassung**

Das computerimplementierte Verfahren dient zur Vermittlung einer Ausführung von einem oder mehreren Arbeitsschritten in einer industriellen Anlage mit zwei oder mehr Ausführungseinrichtungen, wobei die Ausführung der Arbeitsschritte an eine Mehrzahl von Ausführungseinrichtungen zur Ausführung durch diese Ausführungseinrichtungen ausgeschrieben wird und bei welchem ein Arbeitsaufwand der Ausführungseinrichtungen zur Ausführung der Arbeitsschritte abgefragt wird und bei welchem eine der Ausführungseinrichtungen abhängig vom abgefragten Arbeitsaufwand gewählt wird und der gewählten Ausführungseinrichtung die Ausführung der Arbeitsschritte übertragen wird. Das Kooperationsmodul ist zur Ausführung eines solchen Verfahrens ausgebildet.

## Beschreibung

Die Erfindung betrifft ein computerimplementiertes Verfahren zur Vermittlung einer Ausführung einer Arbeitsaufgabe in einer industriellen Anlage mit zwei oder mehr Ausführungseinrichtungen. Die Erfindung betrifft zudem ein Kooperationsmodul und eine Anlage zur Ausführung von Arbeitsaufgaben.

Ausführungseinrichtungen zur Ausführung von maschinellen Arbeitsaufgaben, insbesondere fahrerlose Transportfahrzeuge, auch kurz AGVs (engl: "Automated Guided Vehicles") genannt, sowie autonome mobile Roboter, auch kurz als AMR (engl: "Autonomous Mobile Robots") bezeichnet, spielen bei künftigen Logistiklösungen eine zentrale Rolle. Industriell werden AGVs unter anderem in der Fabrik-Automatisierung und im Lösungsgeschäft bei der Paket- und Gepäcklogistik eingesetzt.

Bisherige Automatisierungslösungen mit solchen Ausführungseinrichtungen sind allerdings nur mit hohem Aufwand an vorhandene Prozesse und Lösungen anpassbar. Meist sind verfügbare Lösungen zudem direkt in statische Automatisierungslösungen integriert. Aufwändig ist weiterhin die Neukonfiguration von Ausführungseinrichtungen in Gestalt von Produktions- und Fertigungseinrichtungen. Auch das dynamische, bedarfsgerechte Skalieren von Systemen von Ausführungseinrichtungen und der Umgang mit Systemstörungen erfordert hohen manuellen Aufwand.

Es ist daher Aufgabe der Erfindung, eine Anpassbarkeit von solchen Lösungen, insbesondere von Automatisierungslösungen, zu verbessern und insbesondere Verfahren anzugeben, mit welchen die Ausführung von, vorzugsweise maschinellen oder automatisierten, Arbeitsaufgaben flexibler und mit verringertem manuellen Aufwand verteilt, d. h. vermittelt, werden kann. Zudem ist es Aufgabe der Erfindung, ein Kooperationsmodul zu schaffen, mittels welchem solche Verfahren, vorzugsweise effizient, ausführbar sind. Zudem ist es Aufgabe der Erfindung, eine verbesserte Anlage zur Ausführung von Arbeitsaufgaben zu schaffen.

Diese Aufgabe der Erfindung wird mit einem Verfahren zur Vermittlung einer Ausführung einer Arbeitsaufgabe in einer, insbesondere industriellen, Anlage mit mindestens zwei Ausführungseinrichtungen mit den in Anspruch 1 angegebenen Merkmalen sowie mit einem Kooperationsmodul mit den in Anspruch 8 angegebenen Merkmalen und mit einer Anlage mit den in Anspruch 15 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße computerimplementierte Verfahren dient zur Vermittlung einer Ausführung einer Arbeitsaufgabe in einer, insbesondere industriellen, Anlage mit mehr als zwei Ausführungseinrichtungen. Bei dem erfindungsgemäßen Verfahren wird die Ausführung der Arbeitsaufgabe an eine Mehrzahl von Ausführungseinrichtungen zur Ausführung durch diese Ausführungseinrichtungen ausgeschrieben und es wird ein Arbeitsaufwand der Ausführungseinrichtungen zur Ausführung der Arbeitsaufgabe abgefragt und es wird eine der Ausführungseinrichtungen abhängig vom abgefragten Arbeitsaufwand gewählt und der gewählten Ausführungseinrichtung die Ausführung der Arbeitsaufgabe zugewiesen.

Unter einer Arbeitsaufgabe ist im Rahmen der vorliegenden Erfindung eine Arbeitsaufgabe eines Arbeitsverfahrens, insbesondere eine Transportaufgabe, und/oder eine Fertigungsaufgabe zu verstehen. Insbesondere sind unter einer Arbeitsaufgabe ein oder mehrere Arbeitsschritte und/oder ein oder mehrere Fertigungsschritte zu verstehen. Besonders bevorzugt ist die Arbeitsaufgabe im Rahmen der vorliegenden Erfindung eine automatisierte und/oder maschinelle Arbeitsaufgabe. Vorzugsweise ist die Ausführungseinrichtung eine autonome Ausführungseinrichtung, welche die Ausführung einer insbesondere maschinellen und/oder automatisierten Arbeitsaufgabe nach Zuweisung der Arbeitsaufgabe zu dieser Ausführungseinrichtung selbstständig, d. h. autonom, also ohne eine zentrale Steuerung der Ausführung der Arbeitsaufgabe, vornehmen kann.

Bei dem erfindungsgemäßen Verfahren wird der Arbeitsaufwand der Ausführungseinrichtungen von den Ausführungseinrichtungen selbst, d. h. nicht durch die Ausführungseinrichtungen, abgefragt. Zweckmäßig ermitteln, insbesondere errechnen, die Ausführungseinrichtungen den Arbeitsaufwand jeweils selbst. Der selbst ermittelte Arbeitsaufwand der Ausführungseinrichtungen kann dann direkt von den jeweiligen Ausführungseinrichtungen abgefragt werden.

Mittels des erfindungsgemäßen Verfahrens können verteilte und in einer industriellen Anlage verfügbare, autonome Ausführungseinrichtungen effizient und ressourcensparend ad-hoc, bedarfsgetrieben und kontextabhängig in einer dezentralen Infrastruktur miteinander kollaborieren und damit als selbstorganisierende Ausführungseinrichtungen robust und selbstorganisiert einander Arbeitsaufgaben zur Ausführung vermitteln und zuweisen. Eine zentrale Steuerung der Ausführungseinrichtungen oder ein zentral festgelegter Arbeitsplan für einzelne Ausführungseinrichtungen ist bei dem erfindungsgemäßen Verfahren nicht erforderlich, um Arbeitsaufgaben an die jeweiligen Ausführungseinrichtungen zu vermitteln.

Die mittels des erfindungsgemäßen Verfahrens leicht mögliche dezentrale und selbstorganisiert vermittelte Ausführung von Arbeitsaufgaben erlaubt vorteilhaft die Skalierung kleiner Systeme hin zu großen Systemen. Denn die selbstorganisiert vermittelte Ausführung von Arbeitsaufgaben kann infolge der verzichtbaren zentralen Planung auf der Ebene der Ausführungseinrichtungen geplant werden, sodass die sonst erforderliche Komplexität einer zentralen Planung infolge der selbstorganisierten Vermittlung entfällt.

Vorzugsweise wird bei dem erfindungsgemäßen Verfahren diejenige Ausführungseinrichtung zur Ausführung der Arbeitsaufgabe gewählt, welche den geringsten Arbeitsaufwand zur Ausführung mitteilt, d. h. übermittelt, wenn der Arbeitsaufwand abgefragt wird. Alternativ und ebenfalls bevorzugt können in Weiterbildungen der Erfindung aber auch weitere Kriterien einbezogen werden, um eine Ausführungseinrichtung zur Ausführung der Arbeitsaufgabe zu wählen, etwa Opportunitätskosten der Ausführungseinrichtung zur Rückstellung anderer Arbeitsvorgänge oder zusätzliche Randbedingungen, insbesondere eine Maximaldauer, welche eine Gesamtheit von Arbeitsaufgaben insgesamt erfordern darf.

Bei dem erfindungsgemäßen Verfahren werden die Ausführungseinrichtungen vorzugsweise mittels eines die Ausführungseinrichtungen verbindenden Kommunikationsnetzwerks angesprochen, um die Ausführung durch die Ausführungseinrichtung auszuschreiben und den Arbeitsaufwand abzufragen. Auf diese Weise können die Ausführungseinrichtungen mittels des Kommunikationsnetzwerks zur kollaborativen Zusammenarbeit miteinander direkt Kontakt aufnehmen und die Vermittlung der Ausführung der Arbeitsaufgabe dezentral und effizient durchführen.

Das Kommunikationsnetzwerk im Sinne der vorliegenden Erfindung ist ein Netzwerk, über welches die Ausführungseinrichtungen und vorzugsweise zudem auch später beschriebene Anforderungseinrichtungen miteinander in Kommunikationsverbindung stehen. Vorzugsweise ist das Kommunikationsnetzwerk ein drahtloses Netzwerk, insbesondere ein Funknetzwerk. Bevorzugt ist das Kommunikationsnetzwerk ein Cloudnetzwerk und/oder ein Internet-der-Dinge-Netzwerk. Insbesondere Internet-der-Dinge-Netzwerke und/oder Cloudnetzwerke sind im industriellen Umfeld etabliert und lassen sich in an sich bekannter Weise für die Ausführung des erfindungsgemäßen Verfahrens einsetzen.

Zweckmäßig ist oder sind bei dem erfindungsgemäßen Verfahren die Arbeitsaufgabe ein oder mehrere Transportvorgänge. Vorzugsweise sind die Ausführungseinrichtungen zudem Transporteinrichtungen, insbesondere fahrerlose Transportfahrzeuge, oder die Ausführungseinrichtungen weisen solche Transporteinrichtungen auf. Gerade in Bezug auf Transportvorgänge mittels fahrerloser Transporteinrichtungen lassen sich Arbeitsaufgaben, d. h. Transportvorgänge oder Teiltransportvorgänge, grundsätzlich autonom durchführen. Entsprechend lassen sich Transportvorgänge als Arbeitsaufgaben besonders flexibel und ohne manuellen Aufwand vermitteln und verteilen, sodass sich in dieser Weiterbildung das erfindungsgemäße Verfahren besonders effizient umsetzen lässt. Alternativ oder zusätzlich und ebenfalls bevorzugt sind die Ausführungseinrichtungen mobile Roboter.

Vorteilhaft schließt bei dem erfindungsgemäßen Verfahren der Arbeitsaufwand eine Ausführungszeit und/oder einen Ressourcenaufwand ein oder macht ihn aus. Die Ausführungszeit und/oder der zur Ausführung der Arbeitsaufgaben erforderliche Ressourcenaufwand stellen insbesondere regelmäßig relevante Prozessparameter bei industriellen Arbeitsvorgängen, etwa bei Fertigungsprozessen, dar. Eine Berücksichtigung dieser Prozessparameter kann die Ausführung des erfindungsgemäßen Verfahrens hinsichtlich dieser Prozessparameter vorteilhaft optimieren. In vorteilhaften Weiterbildungen der Erfindung können alternativ oder zusätzlich Zustandsparameter der Ausführungseinrichtungen in den Arbeitsaufwand eingehen. Insbesondere sind ein aktueller Stand von Betriebsstunden der Ausführungseinrichtungen und/oder eine Länge von Warteschlangen von geplanten Arbeitsvorgängen der Ausführungseinrichtungen und/oder ein interner Energievorrat der jeweiligen Ausführungseinrichtung solche Zustandsparameter. So kann ein knapper Energievorrat der Ausführungseinrichtung als knappe Ressource dazu führen, dass ein Energiebetrag, der für eine Arbeitsaufgabe aufzuwenden ist, als höherer Arbeitsaufwand gewertet wird als derselbe Energiebetrag, wenn Energievorrat im Überfluss vorhanden ist.

In einer bevorzugten Weiterbildung des erfindungsgemäßen Verfahrens wird der Arbeitsaufwand in einem Arbeitspreis bemessen. In dieser Weiterbildung kann eine Bildung eines Arbeitspreises genutzt werden, um die Arbeitsaufgaben effizient unter den Ausführungseinrichtungen zu verteilen. Der Arbeitspreis kann somit als einfache, eindimensionale Maßzahl oder Währung zur Auswahl einer konkreten Ausführungseinrichtung dienen. Wenn etwa der Arbeitspreis einer Ausführungseinrichtung zur Ausführung einer Aufgabe aufgrund einer Warteschlange der Ausführungseinrichtung mit besonders vielen hoch priorisierten Arbeitsaufgaben der Ausführungseinrichtung besonders hoch ist, so werden aufgrund des hohen Arbeitspreises mit höherer Wahrscheinlichkeit Ausführungseinrichtungen gewählt, deren Warteschlangen zu einem geringeren Grad mit Arbeitsaufgaben ausgelastet ist. Somit kann eine Bepreisung des Arbeitsaufwandes Aufgabenstaus und Verteilungen von Arbeitsaufgaben an Ausführungseinrichtungen mit knappen Ressourcen zur Ausführung von Arbeitsaufgaben verringern und insgesamt eine höhere Effizienz bei der Verteilung der Arbeitsaufgaben bewirken.

Vorzugsweise wird das Verfahren gemäß der Erfindung mittels einer Anforderungseinrichtung des kollaborativen, insbesondere industriellen, Netzwerks initiiert, d. h. getriggert, oder ausgeführt, wobei die Anforderungseinrichtung vorzugsweise zugleich eine Ausführungseinrichtung ist. Besonders bevorzugt ist die Anforderungseinrichtung ihrerseits eine Ausführungseinrichtung für Arbeitsaufgabe, welche von weiteren Anforderungseinrichtungen mittels des erfindungsgemäßen Verfahrens zur Ausführung vermittelt werden.

Das erfindungsgemäße Kooperationsmodul für eine Anforderungseinrichtung ist zur Ausführung eines erfindungsgemäßen Verfahrens zur Vermittlung einer Arbeitsaufgabe wie oben beschrieben ausgebildet und weist eine Anforderungseinrichtungsschnittstelle zur Anbindung an eine Anforderungseinrichtung auf. Bei dem erfindungsgemäßen Kooperationsmodul für die Anforderungseinrichtung ist die Anforderungseinrichtungsschnittstelle zur Entgegennahme eines Signals der Anforderungseinrichtung ausgebildet, welches einen Bedarf an einer Ausführung einer Arbeitsaufgabe signalisiert. Das erfindungsgemäße Kooperationsmodul ist zur Ausführung des erfindungsgemäßen Verfahrens ausgebildet, wenn es das Signal der Anforderungseinrichtung erhält. In dieser Weiterbildung der Erfindung kann also die Anforderungseinrichtung mittels des erfindungsgemäßen Kooperationsmoduls für eine Anforderungseinrichtung das erfindungsgemäße Verfahren zur Vermittlung einer Ausführung einer Arbeitsaufgabe ausführen.

Das erfindungsgemäße Kooperationsmodul für eine Ausführungseinrichtung ist zur Verwendung in einem erfindungsgemäßen Verfahren ausgebildet und weist eine Ausführungseinrichtungsschnittstelle zur Anbindung an eine Ausführungseinrichtung wie oben beschrieben auf.

Das erfindungsgemäße Kooperationsmodul für eine Anforderungseinrichtung ist in einer vorteilhaften Weiterbildung der Erfindung als Softwaremodul ausgebildet, das in die Anforderungseinrichtung integriert, insbesondere in oder auf der Anforderungseinrichtung installiert, ist.

Das erfindungsgemäße Kooperationsmodul für eine Ausführungseinrichtung ist zur Verwendung in einem erfindungsgemäßen Verfahren wie oben beschrieben ausgebildet und weist eine Ausführungseinrichtungsschnittstelle zur Anbindung an eine Ausführungseinrichtung auf, wobei die Ausführungseinrichtungsschnittstelle vorzugsweise ausgebildet ist, eine Fähigkeit der Ausführungseinrichtung zur Ausführung einer Arbeitsaufgabe entgegenzunehmen. Zudem weist das erfindungsgemäße Kooperationsmodul für eine Ausführungseinrichtung dabei eine Entgegennahmeschnittstelle zur Entgegennahme von Anforderungen zur Ausführung der Arbeitsaufgabe auf. Weiterhin umfasst dabei das erfindungsgemäße Kooperationsmodul für eine Ausführungseinrichtung eine Bestimmungseinheit zur, vorzugsweise vorherigen, Bestimmung eines Arbeitsaufwandes, der mit der Ausführung der Arbeitsaufgabe verbunden ist, und eine Sendeschnittstelle zur Sendung eines Angebots zur Ausführung der Arbeitsaufgabe zuzüglich einer Aufwandsinformation, welche den mit der Ausführung verbundenen Arbeitsaufwand angibt.

Ausführungseinrichtungen wie AGVs und AMRs, aber auch sonstige Ausführungseinrichtungen wie etwa zu Arbeitsverfahren oder Fertigungsverfahren herangezogene Geräte und Maschinen, lassen sich mittels des erfindungsgemäßen Kooperationsmoduls für eine Ausführungseinrichtung befähigen, effizient und ressourcensparend ad-hoc, bedarfsgetrieben und kontextabhängig Ausführungen von Arbeitsaufgaben in einer dezentralen Infrastruktur zu übernehmen. Zusätzlich lassen sich Anforderungseinrichtungen mittels des erfindungsgemäßen Kooperationsmoduls für eine Anforderungseinrichtung befähigen, effizient und ressourcensparend Arbeitsaufgaben zu koordinieren.

Mittels des erfindungsgemäßen Kooperationsmoduls für eine Ausführungseinrichtung lässt sich das erfindungsgemäße Verfahren zur Vermittlung einer Arbeitsaufgabe besonders bevorzugt leicht mittels eines "Plug-and-Perform"-Ansatzes realisieren. Grundsätzlich nicht selbstorganisiert miteinander kooperierende Ausführungseinrichtungen können mittels des erfindungsgemäßen Kooperationsmoduls für eine Ausführungseinrichtung zur selbstorganisierten Kollaboration leicht auf- oder nachgerüstet werden. Mittels des erfindungsgemäßen Kooperationsmoduls für eine Ausführungseinrichtung können folglich die Ausführungseinrichtungen zur Ausführung des erfindungsgemäßen Verfahrens zur Vermittlung von Arbeitsaufgaben befähigt werden.

Es versteht sich, dass das Kooperationsmodul für eine Ausführungseinrichtung nicht identisch sein muss mit einem Kooperationsmodul für eine Anforderungseinrichtung. Besonders bevorzugt ist allerdings das Kooperationsmodul für eine Ausführungseinrichtung zugleich ein Kooperationsmodul für eine Anforderungseinrichtung. Auf diese Weise kann etwa eine Ausführungseinrichtung mittels des Kooperationsmoduls eine Arbeitsaufgabe übernehmen und etwa die Arbeitsaufgabe erforderlichenfalls weiterreichen, wenn unvorhergesehen die Ausführung der Arbeitsaufgabe nicht möglich ist oder wenn eine Teilaufgabe der Arbeitsaufgabe als Unterauftrag vergeben werden soll. Das Kooperationsmodul für eine Ausführungseinrichtung erlaubt dann in der gleichzeitigen Ausbildung als Kooperationsmodul für eine Anforderungseinrichtung die Ausführung des erfindungsgemäßen Verfahrens, bei welchem die Arbeitsaufgabe oder ein Teil der Arbeitsaufgabe an weitere Ausführungseinrichtung vermittelt wird.

Das erfindungsgemäße Kooperationsmodul für eine Ausführungseinrichtung ist in einer vorteilhaften Weiterbildung der Erfindung als Softwaremodul ausgebildet, das in die Ausführungseinrichtung integriert, insbesondere auf der Ausführungseinrichtung installiert, ist.

Die mit dem erfindungsgemäßen Kooperationsmodul für eine Ausführungseinrichtung oder dem erfindungsgemäßen Kooperationsmodul für eine Anforderungseinrichtung ausgestatteten Ausführungs- und Anforderungseinrichtungen sind infolge der Anbindung des Kooperationsmoduls für eine Ausführungseinrichtung oder des Kooperationsmodul für eine Anforderungseinrichtung als so genannten Agenten in einem Netzwerk aus Agenten befähigt: In diesem Netzwerk können einzelne Agenten mit Hilfe des Kooperationsmoduls für eine Ausführungseinrichtung oder des Kooperationsmoduls für eine Anforderungseinrichtung die Rollen der Ausführungseinrichtung und Anforderungseinrichtungen übernehmen:
In der Rolle einer Anforderungseinrichtung kann der Agent eine Ausführung von Arbeitsaufgaben, etwa einen Transport, anfordern, d. h. beauftragen, und stellt dazu die Arbeitsaufgabe, die ausgeführt werden soll, mit bestimmten Parametern in das Netzwerk der Agenten ein. Diese Parameter können insbesondere Bedingungen an die Ausführung, zweckmäßig ein Transporttyp, und/oder Beschränkungen, zweckmäßig ein Fahrzeugtyp und/oder Parameter des Zuweisungsverfahrens, vorzugsweise ein Zuweisungsalgorithmus und/oder Zuweisungsparameter, sein.

Der Zuweisungsalgorithmus ist vorzugsweise eine Versteigerung der Ausführung der Arbeitsaufgabe: In der Rolle einer Ausführungseinrichtung wartet der Agent auf eine ausgeschriebene Ausführung der Arbeitsaufgabe, die zu seinen Fähigkeiten passt und nimmt an einem entsprechenden Zuweisungsverfahren gemäß dem Zuweisungsalgorithmus teil. Nach Zuweisung der Arbeitsaufgabe führt der Agent die ihm mit der Zuweisung zugewiesene Arbeitsaufgabe wie ausgeschrieben aus.

Grundsätzlich können in vorteilhaften Weiterbildungen der Erfindung Ausführungseinrichtungen und Anforderungseinrichtungen mittels ein und derselben Einrichtung realisiert sein. Prinzipiell kann eine Einrichtung, welche eine Ausführungseinrichtung bildet, auch ihrerseits Ressourcen zur Unterstützung bei der Ausführung der Arbeitsaufgabe bei weiteren Ausführungseinrichtungen anfragen und damit Teilaufgaben in der Form einer Ausführung von Unterarbeitsaufgaben an andere Ausführungseinrichtungen delegieren oder übergeben.

Zweckmäßig ist das erfindungsgemäße Kooperationsmodul für eine Anforderungseinrichtung mittels einer Software zur Ausführung der erfindungsgemäßen Verfahrensschritte eingerichtet. Grundsätzlich kann das erfindungsgemäße Kooperationsmodul aber auch mittels einer logischen Schaltung zur Ausführung der erfindungsgemäßen Verfahrensschritte ausgebildet und eingerichtet sein.

Das erfindungsgemäße Kooperationsmodul für eine Ausführungseinrichtung und/oder das erfindungsgemäße Kooperationsmodul für eine Anforderungseinrichtung ist/sind vorzugsweise jeweils ein Softwaremodul. Vorteilhaft ist das Kooperationsmodul als Softwaremodul auf Ausführungsgeräten und/oder Anforderungsgeräten in Form von Edge-Computing-Devices und/oder Embedded-Devices oder programmierbaren Logikbausteinen, insbesondere speicherprogrammierbaren Steuerungseinheiten, vorzugsweise PLCs (PLC = engl. "Programmable Logic Controller"), oder Smartphones oder Tablets ausführbar.

In einer alternativen und ebenfalls vorteilhaften Weiterbildung der Erfindung ist das Kooperationsmodul als separates Hardwaremodul ausgebildet.

In einer vorteilhaften Weiterbildung des erfindungsgemäßen Kooperationsmoduls für eine Ausführungseinrichtung ist dieses eingerichtet, Fähigkeiten der Ausführungseinrichtungen zur Ausführung der Arbeitsaufgabe und Besonderheiten der Kommunikation der Ausführungseinrichtung in eine für sämtliche übrigen Kooperationsmodule CME, CMR des Kooperationsnetzwerks CN verständliche Form zu übersetzen und von den Einzelheiten der jeweiligen Ausführungseinrichtung zu abstrahieren. Auf diese Weise lässt sich mittels miteinander verbundener erfindungsgemäßer Kooperationsmodule ein Kooperationsnetzwerk ausbilden, welches die individuellen Kommunikationseigenschaften einzelner Ausführungseinrichtungen sowie die gegebenenfalls abweichenden Beschreibungen von Fähigkeiten der jeweiligen Ausführungseinrichtung ausblendet. Somit lässt sich mittels der erfindungsgemäßen Kooperationsmodule ein Kooperationsnetzwerk errichten, in welchem die Ausführung von Arbeitsaufgaben in einer einheitlichen Weise ausgeschrieben und verstanden werden kann und Besonderheiten der einzelnen Ausführungs- und Anforderungseinrichtungen nicht auf Netzwerkebene des Kooperationsnetzwerks individuell adressiert werden müssen.

Geeigneterweise ist bei dem erfindungsgemäßen Kooperationsmodul für eine Ausführungseinrichtung die Entgegennahmeschnittstelle zur Entgegennahme oder zum Senden von Anforderungen in Gestalt von Publish-Subscribe-Nachrichten eingerichtet, insbesondere spezifisch nach den Fähigkeiten der an der Ausführungseinrichtungsschnittstelle angebundenen Ausführungseinrichtung. Mittels Publish-Subscribe-Nachrichten lässt sich auf einfache Weise eine Ausschreibung der Ausführung der Arbeitsaufgabe durchführen. So müssen nicht sämtliche Ausführungseinrichtungen mit sämtlichen Anforderungseinrichtungen ständig in direkter Verbindung miteinander kommunizieren, sondern es ist hinreichend, wenn Ausführungseinrichtungen lediglich diejenigen Nachrichten abonnieren, die sie selbst betreffen. So können Ausführungseinrichtungen nur solche Publish-Subscribe-Nachrichten abonnieren, welche Arbeitsaufgaben betreffen, die sie selbst ausführen können. Ferner kann auch der Arbeitsaufwand jeweils mittels Publish-Subscribe-Nachrichten mitgeteilt werden.

Vorzugsweise ist bei dem erfindungsgemäßen Kooperationsmodul die Ausführungseinrichtungsschnittstelle ausgebildet, eine Warteschlange von geplanten Arbeitsvorgängen der Ausführungseinrichtung entgegenzunehmen. Auf diese Weise lassen sich neu zugewiesene Arbeitsaufgaben leicht in die Warteschlange von geplanten Arbeitsvorgängen integrieren.

Das erfindungsgemäße Kooperationsmodul für eine Anforderungseinrichtung weist in einer bevorzugten Weiterbildung eine Konfigurationsschnittstelle auf, mittels welcher ein Algorithmus konfiguriert wird, gemäß welchem eine Ausführungseinrichtungen abhängig vom abgefragten Arbeitsaufwand gewählt wird. Ein solcher Algorithmus kann ein Zuweisungsalgorithmus wie oben erläutert sein, der insbesondere eine Ausschreibung und Auktion von Ausführungen von Arbeitsaufgaben vorsieht. Ferner können auch sonstige Algorithmen mittels der Konfigurationsschnittstelle konfiguriert werden.

Die erfindungsgemäße Anlage umfasst zwei oder mehr Ausführungseinrichtungen mit je einem an die Ausführungseinrichtungen angebundenen erfindungsgemäßen Kooperationsmodul für eine Ausführungseinrichtung wie zuvor beschrieben und die erfindungsgemäße Anlage umfasst zudem zwei oder mehr Anforderungseinrichtungen mit je einem an die Anforderungseinrichtungen angebundenen erfindungsgemäßen Kooperationsmodul für eine Anforderungseinrichtung wie zuvor beschrieben. Bei der erfindungsgemäßen Anlage sind die Kooperationsmodule der Ausführungseinrichtungen und der Anforderungseinrichtungen miteinander zur Ausführung eines erfindungsgemäßen Verfahrens zur Vermittlung einer Ausführung einer Arbeitsaufgabe wie oben beschrieben mittels eines Kommunikationsnetzwerks verbunden.

Die erfindungsgemäße Anlage ist vorzugweise eine industrielle Anlage, insbesondere eine Fertigungsanlage und/oder eine Bearbeitungsanlage.

Nachfolgend wird die Erfindung anhand eines in der Zeichnung angegebenen Ausführungsbeispiels näher erläutert. Es zeigen:
- Fig. 1: ein Kooperationsnetzwerk einer industriellen Anlage mit einer Anforderungseinrichtung und mit einer Ausführungseinrichtung, an welcher jeweils ein erfindungsgemäßes Kooperationsmodul angebunden ist, ausgebildet zur Ausführung eines erfindungsgemäßen Verfahrens schematisch in einer Prinzipskizze,
- Fig. 2: die Ausführungseinrichtung mit dem an dieser angebundenen erfindungsgemäßen Kooperationsmodul gem. Fig. 1 schematisch in einer Prinzipskizze sowie
- Fig. 3: das erfindungsgemäße Verfahren zur Vermittlung einer Ausführung einer Arbeitsaufgabe schematisch in einem Prozessdiagramm.

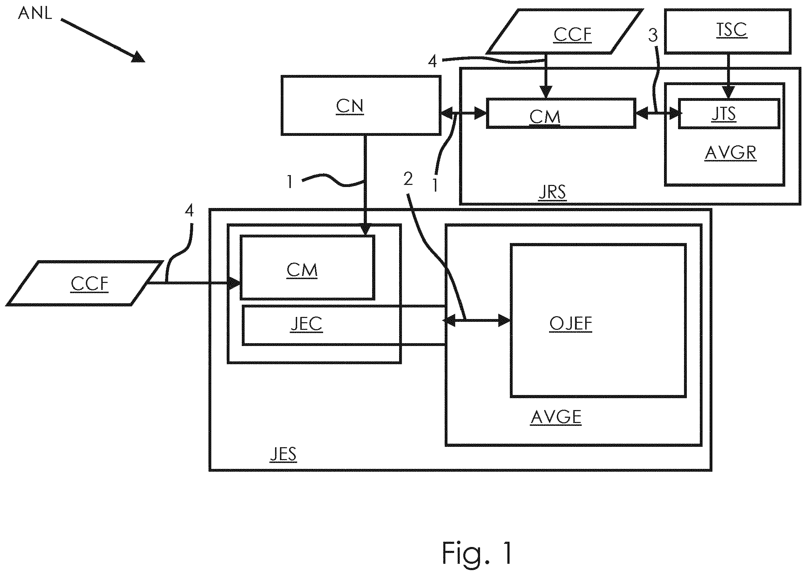

Die Figur 1 zeigt beispielhaft eine Kooperation von Ausführungssystemen JES zur Ausführung von Arbeitsaufgaben sowie von Anforderungssystemen JRS zur Anforderung von Arbeitsaufgaben, welche jeweils ein fahrerloses Transportfahrzeug AVGE oder AVGR umfassen.

Dabei bildet das fahrerlose Transportfahrzeug des Ausführungssystems JES jeweils eine Ausführungseinrichtung AVGE im Sinne der vorliegenden Erfindung. Entsprechend bildet das fahrerlose Transportfahrzeug des Anforderungssystems JRS eine Anforderungseinrichtung AVGR im Sinne der vorliegenden Erfindung.

Das Ausführungssystem JES zur Ausführung von Arbeitsaufgaben sowie das Anforderungssystem JRS zur Anforderung JR von Arbeitsaufgaben sind Teil eines Kooperationsnetzwerks CN einer, insbesondere industriellen, erfindungsgemäßen Anlage ANL. Dabei weist das Kooperationsnetzwerk CN mehrere Ausführungssysteme JES zur Ausführung von Arbeitsaufgaben sowie mehrere Anforderungssysteme JRS zur Anforderung JR von Arbeitsaufgaben auf. Mittels des Kooperationsnetzwerks CN werden Arbeitsaufgaben, welche von den Anforderungssystemen JRS angefordert und von den Ausführungssystemen JES ausgeführt werden, vermittelt.

Das Ausführungssystem JES zur Ausführung von Arbeitsaufgaben weist ein erfindungsgemäßes Kooperationsmodul CME für eine Ausführungseinrichtung AVGE des Ausführungssystems JES auf, um die für die Arbeitsaufgaben zur Verfügung stehenden Arbeitsfunktionen JEF des Ausführungssystems JES in dem Kooperationsnetzwerk CN zur Verfügung zu stellen. Das Kooperationsmodul CME für eine Ausführungseinrichtung AVGE (nachfolgend auch kurz Kooperationsmodul genannt) wird mittels einer Kooperationskonfigurationsdatei CCF über eine Konfigurationsschnittstelle 4 konfiguriert. Das Kooperationsmodul CME bildet gemeinsam mit der Ausführungseinrichtung AVGE das Ausführungssystem JES.

Diese Arbeitsfunktionen OJEF des fahrerlosen Transportfahrzeuges des Ausführungssystems JES zur Ausführung von Arbeitsaufgaben sind über einen generischen Ausführungsschnittstelle JEC, welcher spezifisch an den jeweils konkreten Fahrzeugtyp des fahrerlosen Transportfahrzeugs angepasst ist, für das Kooperationsmodul CME verfügbar. Der Ausführungsschnittstelle JEC ist mittels einer Ausführungsanschlussschnittstelle 2b, welche eine Programmierschnittstelle bildet, programmierbar. Der Ausführungsschnittstelle JEC ist mittels einer Arbeitsfunktionsschnittstelle 2 mit dem Arbeitsfunktionen OJEF verbunden. Somit kann das Kooperationsmodul CME über die Arbeitsfunktionsschnittstelle 2 und den Ausführungsschnittstelle JEC auf die Arbeitsfunktionen OJEF der Ausführungseinrichtung AVGE zugreifen.

Das Anforderungssystem JRS zur Anforderung von Arbeitsaufgaben weist ebenfalls ein Kooperationsmodul CMR, allerdings ein Kooperationsmodul für eine Anforderungseinrichtung AVGR, auf, mittels welchem die Ausführung von Arbeitsaufgaben derart angefordert werden kann, dass das Kooperationsmodul CMR eine Arbeitsaufgabe mittels einer Ausschreibung zur Ausführung einer Arbeitsaufgabe durch die Ausführungssysteme JES im Kooperationsnetzwerk CN einstellt. Nachfolgend wird das Kooperationsmodul CMR für eine Anforderungseinrichtung AVGR ebenfalls kurz als Kooperationsmodul CMR bezeichnet. Dazu übermittelt das Anforderungssystem JRS seinem Kooperationsmodul CMR die Arbeitsaufgabe über die Anforderungsschnittstelle 3. Das Anforderungssystem JRS ermittelt dabei einen Bedarf an einer Ausführung einer Arbeitsaufgabe mittels eines Bedarfsermittlungssystems JTS, welches mittels einer Bedarfsermittlungskonfiguration TSC konfiguriert ist. Wird ein Bedarf an der Ausführung einer Arbeitsaufgabe festgestellt, so übermittelt das Bedarfsermittlungssystem JTS die erforderliche Arbeitsaufgabe über die Anforderungsschnittstelle 3 an das Kooperationsmodul CMR. Das Kooperationsmodul CMR wird mittels einer Kooperationskonfigurationsdatei CCF über eine Konfigurationsschnittstelle 4 konfiguriert. Die Kooperationskonfigurationsdatei enthält zusätzlich einen Algorithmus, gemäß welchem diejenige Ausführungseinrichtungen AVGE abhängig vom abgefragten Arbeitsaufwand gewählt wird, im dargestellten Ausführungsbeispiel einen Auktionsalgorithmus, bei welchem diejenige Ausführungseinrichtung AVGE gewählt wird, welche den geringsten Arbeitsaufwand ermittelt. Die Ausführungssysteme JES mit Kooperationsmodul CME und die Anforderungssysteme JRS mit Kooperationsmodul CME kommunizieren dann zur Selbstorganisation über ein Kooperationsprotokoll mittels der Netzwerkschnittstellen 1 über das Kooperationsnetzwerk CN.

Das Kooperationsmodul CMR bildet gemeinsam mit der Anforderungseinrichtung AVGR das Anforderungssystem JRS. Die Kooperationsmodule CMR, CME sind jeweils als Softwaremodul realisiert und über die Ausführungsschnittstelle JEC an die Ausführungseinrichtung AVGE oder über die Anforderungsschnittstelle 3 an die Anforderungseinrichtung AVGR zur Bildung von Ausführungssystem JES und Anforderungssystem JRS als Plugand-Perform-Komponente angebunden.

In weiteren, nicht eigens dargestellten Ausführungsbeispielen können die Kooperationsmodule CME, CMR auch als separate Vorrichtung realisiert sein, die in Gestalt einer zusätzlichen Hardware an die Anforderungseinrichtung AVGR angebunden ist.

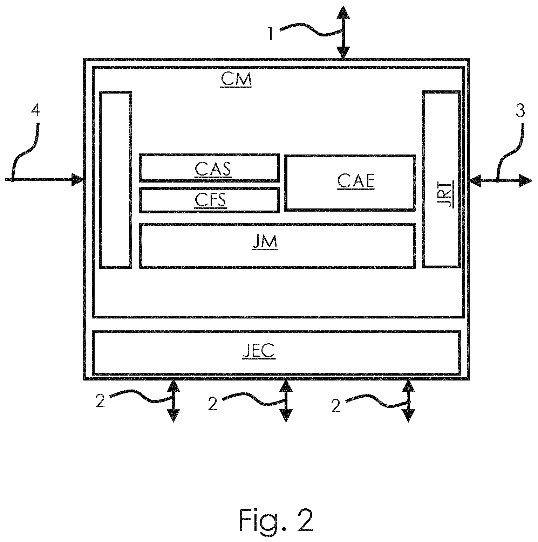

Neben den Anforderungsschnittstellen 3 und den Ausführungsschnittstellen JEC, mit welchen die Kooperationsmodule CME, CMR in die Ausführungssysteme JES und in die Anforderungssysteme JRS eingebunden sind, sind weitere zusätzliche funktionelle Module des Kooperationsmoduls CME in Fig. 2 dargestellt. Das Kooperationsmodul CME der Fig. 2 ist an eine Ausführungseinrichtung AVGE zur Bildung eines Ausführungssystems JES angebunden.

So weist das Kooperationsmodul CME einen Speicher CAS mit Kooperationsalgorithmen auf, wobei die Kooperationsalgorithmen als Plug-In-Komponenten eingebunden sind. Die Kooperationsalgorithmen bestimmen den Ablauf der Interaktion von Ausführungssystemen JES und Anforderungssystemen JRS und das Verfahren zur Selbstorganisation. Beispielsweise sind die Kooperationsalgorithmen als Auktionsverfahren ausgebildet, bei welchem Ausführungssysteme JES ein Angebot zur Ausführung der Arbeitsaufgabe auf Basis ihrer Kostenberechnung abgeben. Bei diesen Kooperationsalgorithmen entscheiden die Anforderungssysteme JRS nach Ablauf einer bestimmten Angebotsfrist, welches Angebot eines Ausführungssystems JES zu den geringsten Kosten C angenommen werden kann. Dieses Angebot zur Ausführung der Arbeitsaufgabe des Ausführungssystems JES wird dem Ausführungssystem JES dann endgültig zugewiesen, d. h. die Arbeitsaufgabe wird bei dem betreffenden Ausführungssystem JES mit den geringsten Kosten C beauftragt.

Das Kooperationsmodul CME weist zudem einen konfigurierbaren Kostenfunktionsspeicher CFS von Kostenfunktionen CF auf. Die Kostenfunktionen CF sind ebenfalls als Plug-In-Komponente realisierte Algorithmen, die aus konfigurierbaren Parametern des Ausführungssystems JES bestimmen, was die Kosten C für dieses Ausführungssystem JES für eine Erfüllung einer Anfrage JR zur Ausführung der Arbeitsaufgabe wären. Diese Parameter können aus verschiedenen Umständen resultieren, insbesondere aus einem Systemzustand oder aus potenziellen Auftragsaufwänden oder Umgebungszuständen.

Eine Kooperationsalgorithmus-Ausführungskomponente CAE übernimmt die Verarbeitung eingehender Anforderungen zur Ausführung von Arbeitsaufgaben oder das Ausgeben von Anforderungen zur Ausführung von Arbeitsaufgaben in das Kooperationsnetzwerk CN. Die Zuweisung erfolgt anhand der Konfiguration des Kooperationsmoduls CMR des Anforderungssystems JRS und des gewählten Kooperationsalgorithmus zur Anforderung der Ausführung der Arbeitsaufgabe.

Das Anforderungsmanagement-Modul JM übernimmt die Verwaltung aller Anforderungen zur Ausführung von Arbeitsaufgaben, welche diese Instanz des Kooperationsmoduls CME betreffen. Diese Verwaltung beinhaltet Prozesse in Gestalt einer Statusüberwachung von Anforderungen, eines Verwaltens von Warteschlangen von Anforderungen sowie eines Anstoßens von Aktionen in Abhängigkeit von Ergebnissen eines oder mehrerer der zuvor genannten Prozesse der Verwaltung, sowie Prozesse, welche ein Fehler- und Eskalationsmanagement oder eine Mitteilung von Statusaktualisierungen an andere Kooperationsmodule CMR umfassen.

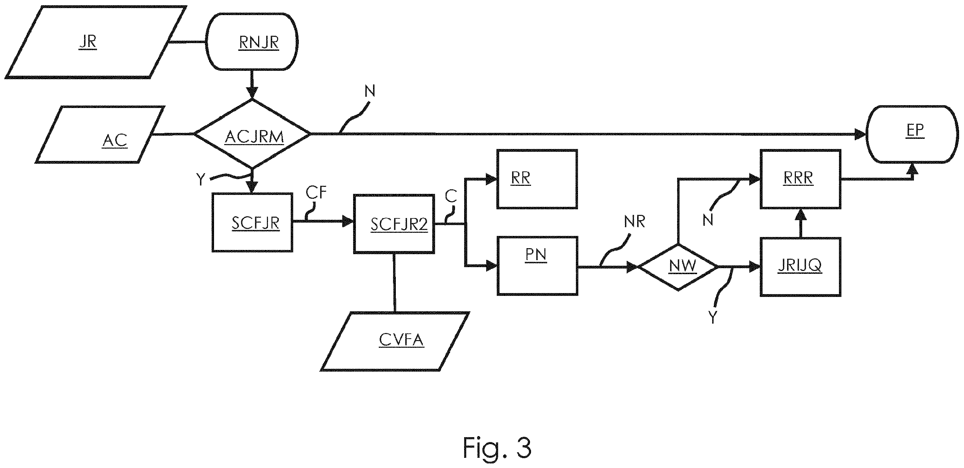

Figur 3 zeigt ein Ausführungsbeispiel für Kooperationsalgorithmen und ihre Ausführung auf einem Ausführungssystem JES:
Die Kooperationsalgorithmen von Ausführungssystemen JES werden mittels der Kostenfunktionen CF des Kostenspeichers CFS und mittels der Koordinationsalgorithmen des Speichers CAS des Kooperationsmoduls CME, wie es im Ausführungsbeispiel des fahrerlosen Transportfahrzeugs gemäß Fig. 2 gezeigt ist, ausgeführt. Die Kooperationsalgorithmen werden dabei dezentral auf solchen fahrerlosen Transportfahrzeugen AGVE, die in Ausführungssystemen JES zur Verfügung stehen, wie in Fig. 3 dargestellt ausgeführt:
Zunächst erhält das Ausführungssystem JES eine Anforderung JR einer Arbeitsaufgabe eines Anforderungssystems JRS. Die Anforderung JR der Arbeitsaufgabe umfasst dabei sowohl ein definiertes Arbeitsergebnis als auch zur Ausführung der Arbeitsaufgabe erforderliche Arbeitsanweisungen und zu erfüllende Anforderungen.

Wenn das Ausführungssystem JES die Anforderung JR der Arbeitsaufgabe in einem Prozessschritt RNJR erhält, so wird in einem weiteren Prozessschritt ACJRM geprüft, ob das Ausführungssystem die passenden Fähigkeiten AC zur Ausführung der Arbeitsaufgabe aufweist. Ist das Ergebnis der Prüfung negativ N, so wird die weitere Bearbeitung der Anforderung JR der Arbeitsaufgabe in einem Prozessschritt EP beendet.

Ist das Ergebnis der Prüfung positiv Y, so wird anhand der Anforderung JR der Arbeitsaufgabe eine Kostenfunktion CF zur Bezifferung des Arbeitsaufwandes in einem Prozessschritt SCFJR gewählt. Die Kostenfunktion CF wird nun herangezogen, um die Kosten C in einem Prozessschritt SCFJR2 zu bestimmen. Dazu werden in dem jeweiligen Kooperationsmodul CME hinterlegte Kostenwerte CVFA des jeweiligen fahrerlosen Transportfahrzeugs AGV herangezogen. Abhängig von den Kosten C werden ggf. noch Ressourcen für die Ausführung der Arbeitsaufgabe, die mit der Anforderung JR der Arbeitsaufgabe angefordert worden ist, in einem Prozessschritt RR reserviert.

Mit den anhand der Kostenfunktion CF bestimmten Kosten C beginnt das Kooperationsmodul CME des Ausführungssystems JES eine Verhandlung NR, indem es seine Kosten C mittels eines Sendevorgangs PN an das Kooperationsmodul CME desjenigen Anforderungssystems JRS sendet, welches die Anforderung JR der Arbeitsaufgabe in das Kooperationsnetzwerk CN eingestellt hat. Nachfolgend wird in einem Prozessschritt NW geprüft, ob das Ausführungssystem JES die Verhandlung NR gewonnen hat, d. h. es wird das Ergebnis des die Arbeitsaufgabe ausschreibenden Anforderungssystem JRS abgefragt, ob das Ausführungssystem JES die niedrigsten Kosten C zur Ausführung der Arbeitsaufgabe der Anforderung JR anbieten kann. Wenn das Ergebnis dieser Prüfung negativ ist N, so werden die für die Ausführung der Arbeitsaufgabe der Anforderung JR reservierten Ressourcen in einem Arbeitsaufgabe RRR wieder freigegeben. Auch in diesem Fall wird die Ausführung der Selbstorganisationsfunktionen mit einem Prozessschritt EP beendet.

Resultiert das Prüfen im Prozessschritt NW in einer positiven Antwort Y, so hat das Ausführungssystem JES die Ausführung der Arbeitsaufgabe der Anforderung JR erfolgreich für sich einverhandelt und die Arbeitsaufgabe der Anforderung JR wird in eine von dem Ausführungssystem JES auszuführende Warteschlange von Arbeitsvorgängen in einem Prozessschritt JRIJQ eingegliedert.

In einem weiteren Ausführungsbeispiel ist das Kooperationsmodul CME ausschließlich physikalisch an die übrige Hardware des Ausführungssystems JES angebunden. In diesem Ausführungsbeispiel wird die Integration des Kooperationsmoduls CME in das Ausführungssystem JES beispielsweise über ein Kabel realisiert, über das eine standardisierte physikalische Kommunikation läuft. Auf diese Weise können bestehende autonome Systeme mittels 'plug and perform' befähigt werden, angefragte Arbeitsaufgaben selbstorganisiert zu übernehmen.

In weiteren, nicht eigens dargestellten Ausführungsbeispielen ist das Kooperationsmodul CME für eine Ausführungseinrichtung AVGE zugleich als Kooperationsmodul CMR für eine Anforderungseinrichtung AVGR ausgebildet und eingerichtet.

Die oben beschriebenen Ausführungsbeispiele für die Vermittlung der Ausführung von Arbeitsaufgaben sind nur beispielhaft zu verstehen. Die Erfindung lässt sich auch in einer Vielzahl von anderen Anwendungsdomänen, etwa in der intelligenten Fertigung, vorteilhaft einsetzen.

In einem weiteren Ausführungsbeispiel, welches dem zuvor beschriebenen Ausführungsbeispiel im Übrigen entspricht, weist das Kooperationsnetzwerk eine heterogene Eigentümer- und Betreiberstruktur auf. Das bedeutet, die Ausführungssysteme JES werden von unterschiedlichen Betreibern betrieben. Auch die Eigentümer verschiedener Ausführungssysteme JES unterscheiden sich. Die Vermittlung der Ausführung von Arbeitsaufgaben sowie die tatsächliche Auswahl des Ausführungssystems JES erfolgt mittels kryptographischer Verfahren und Signaturen, beispielsweise in einer dezentralen Datenbank wie etwa einer Blockchain und/oder mittels Smart Contracts. In diesem Ausführungsbeispiel ist die Transaktionssicherheit und Auditierbarkeit mittels kryptographischer Verfahren und/oder mittels Smart Contracts abgesichert.

## Patentansprüche

1. Computerimplementiertes Verfahren zur Vermittlung einer Ausführung einer Arbeitsaufgabe in einer, insbesondere industriellen, Anlage (ANL) mit zwei oder mehreren Ausführungseinrichtungen (AVGE), bei welchem die Ausführung der Arbeitsaufgabe an eine Mehrzahl von Ausführungseinrichtungen (AVGE) zur Ausführung durch jeweils eine dieser Ausführungseinrichtungen (AVGE) ausgeschrieben wird und bei welchem ein Arbeitsaufwand (C) der jeweiligen Ausführungseinrichtungen (AVGE) zur Ausführung der Arbeitsaufgabe abgefragt wird und bei welchem eine der Ausführungseinrichtungen (AVGE) abhängig vom abgefragten Arbeitsaufwand (C) gewählt wird und der gewählten Ausführungseinrichtung (AVGE) die Ausführung der Arbeitsaufgabe übertragen wird.

2. Verfahren nach dem vorhergehenden Anspruch, bei welchem diejenige Ausführungseinrichtung (AVGE) zur Ausführung der Arbeitsaufgabe gewählt wird, welche den geringsten Arbeitsaufwand (C) zur Ausführung mitteilt.

3. Verfahren nach einem der vorhergehenden Ansprüche, bei welchem die Ausführungseinrichtungen (AVGE) mittels eines die Ausführungseinrichtungen (AVGE) verbindenden Kommunikationsnetzwerks (CN) angesprochen werden, um die Ausführung an die Ausführungseinrichtungen (AVGE) auszuschreiben und den Arbeitsaufwand abzufragen.

4. Verfahren nach einem der vorhergehenden Ansprüche, bei welchem die Arbeitsaufgabe Transportvorgänge umfasst oder darstellen und die Ausführungseinrichtungen (AVGE) Transporteinrichtungen, insbesondere fahrerlose Transportfahrzeuge, sind oder aufweisen.

5. Verfahren nach einem der vorhergehenden Ansprüche, bei welchem der Arbeitsaufwand (C) eine Ausführungszeit und/oder einen Ressourcenaufwand einschließt oder ausmacht.

6. Verfahren nach einem der vorhergehenden Ansprüche, bei welchem der Arbeitsaufwand (C) in einem Arbeitspreis bemessen wird.

7. Verfahren nach einem der vorhergehenden Ansprüche, welches mittels einer Anforderungseinrichtung (AVGR) der Anlage initiiert oder ausgeführt wird, wobei die Anforderungseinrichtung (AVGR) vorzugsweise zudem eine Ausführungseinrichtung (AVGE) ist.

8. Kooperationsmodul für eine Anforderungseinrichtung, ausgebildet zur Ausführung eines Verfahrens zur Vermittlung einer Arbeitsaufgabe, aufweisend eine Anforderungseinrichtungsschnittstelle (3) zur Anbindung an eine Anforderungseinrichtung (AVGR), wobei die Anforderungseinrichtungsschnittstelle (3) zur Entgegennahme eines Signals der Anforderungseinrichtung (AVGR) ausgebildet, welches einen Bedarf an einer Ausführung einer Arbeitsaufgabe signalisiert.

9. Kooperationsmodul für eine Anforderungseinrichtung nach einem der vorhergehenden Ansprüche, welches als Softwaremodul ausgebildet ist, das in die Anforderungseinrichtung (AVGR) integriert, insbesondere auf der oder in der Anforderungseinrichtung (AVGR) installiert, ist.

10. Kooperationsmodul für eine Ausführungseinrichtung (AVGE), ausgebildet zur Befähigung von Ausführungseinrichtungen (AVGE) zur Teilnahme an einem Verfahren nach einem der vorhergehenden Ansprüche, aufweisend eine Ausführungseinrichtungsschnittstelle (JEC) zur Anbindung an eine Ausführungseinrichtung (AVGE), wobei die Ausführungseinrichtungsschnittstelle (JEC) ausgebildet ist, eine Fähigkeit der Ausführungseinrichtung (AVGE) zur Ausführung der Arbeitsaufgabe entgegenzunehmen sowie aufweisend eine Entgegennahmeschnittstelle (1) zur Entgegennahme von Anforderungen zur Ausführung der Arbeitsaufgabe, einer Bestimmungseinheit zur Bestimmung (SCFJR2) eines Arbeitsaufwandes (C), der mit der Ausführung der Arbeitsaufgabe verbunden ist, und mit einer Schnittstelle (1) zur Sendung eines Angebots zur Ausführung der Arbeitsaufgabe zuzüglich einer Aufwandsinformation, welche den mit der Ausführung verbundenen Arbeitsaufwand (C) angibt, wobei das Kooperationsmodul (CME) für eine Ausführungseinrichtung (AVGE) vorzugsweise zugleich ein Kooperationsmodul (CMR) für eine Anforderungseinrichtung bildet.

11. Kooperationsmodul für eine Ausführungseinrichtung (AVGE) nach einem der vorhergehenden Ansprüche, welches als Softwaremodul ausgebildet ist, das in die Ausführungseinrichtung (AVGE) integriert, insbesondere auf der Ausführungseinrichtung (AVGE) installiert, ist.

12. Kooperationsmodul für eine Ausführungseinrichtung (AVGE) nach einem der vorhergehenden Ansprüche, bei welchem die Entgegennahmeschnittstelle (1) zum Empfang von Publish-Subscribe-Nachrichten, insbesondere gefiltert nach einer Hardware der an der Ausführungseinrichtungsschnittstelle (JEC) oder der an der Anforderungseinrichtungsschnittstelle (3) angebundenen Anforderungseinrichtung (AVGR) und/oder eine Ausführungseinrichtung (AVGE), ausgebildet ist.

13. Kooperationsmodul für eine Ausführungseinrichtung (AVGE) nach einem der vorhergehenden Ansprüche, bei welchem die Ausführungseinrichtungsschnittstelle (JEC) ausgebildet ist, eine Warteschlange für Arbeitsvorgänge der Ausführungseinrichtung (AVGE) entgegenzunehmen.

14. Kooperationsmodul für eine Anforderungseinrichtung nach einem der vorhergehenden Ansprüche, aufweisend eine Konfigurationsschnittstelle (4), mittels welcher ein Algorithmus konfiguriert wird, gemäß welchem eine Ausführungseinrichtungen abhängig vom abgefragten Arbeitsaufwand (C) gewählt wird.

15. Anlage, umfassend zwei oder mehr Ausführungseinrichtungen (AVGE) mit je einem an die Ausführungseinrichtungen (AVGE) angebundenen Kooperationsmodul (CME) für eine Ausführungseinrichtung (AVGE) nach einem der vorhergehenden Ansprüche und mit zwei oder mehr Anforderungseinrichtungen (AVGR) mit je einem an die Anforderungseinrichtungen (AVGR) angebundenen Kooperationsmodul (CMR) für eine Anforderungseinrichtung (AVGR) nach einem der vorhergehenden Ansprüche, bei welchem die an die Ausführungseinrichtungen (AVGE) angebundenen Kooperationsmodule (CME) für eine Ausführungseinrichtung (AVGE) und die an die Anforderungseinrichtungen (AVGR) angebundenen Kooperationsmodule (CMR) für eine Anforderungseinrichtung (AVGR) miteinander zur Ausführung eines Verfahrens mittels eines Kommunikationsnetzwerks (CM) verbunden sind.
